# EUROPEAN PATENT SPECIFICATION

(11) **EP 3 151 442 B1**
(45) Date of publication and mention of the grant of the patent: **10.04.2019**
(21) Application number: 15800115.6
(22) Date of filing: 28.04.2015
(51) Int. Cl.: H04B 1/59, B25F 5/00, G05B 23/02, G06K 7/10, H04B 5/00

(54) **WIRELESS COMMUNICATION APPARATUS AND ELECTRIC POWER TOOL-USE APPARATUS**
DRAHTLOSKOMMUNIKATIONSVORRICHTUNG UND ELEKTROWERKZEUGNUTZUNGSVORRICHTUNG
APPAREIL DE COMMUNICATION SANS FIL ET APPAREIL D'UTILISATION D'OUTILS ELECTRIQUES

(30) Priority: 26.05.2014 JP 2014108352
(43) Date of publication of application: 05.04.2017
(73) Proprietor: Makita Corporation, Anjo-shi, Aichi 446-8502 (JP)
(72) Inventor: KUSAKAWA, Takuya, Anjo-shi Aichi 446-8502 (JP)
(74) Representative: Kramer Barske Schmidtchen Patentanwälte PartG mbB
(86) International application number: PCT/JP2015/062838
(87) International publication number: WO 2015/182323

(56) References cited:
- WO-A1-2013/128501
- WO-A1-2013/187340
- JP-A- H06 187 519
- JP-A- 2003 178 281
- JP-A- 2007 257 345
- JP-A- 2010 049 530
- US-A1- 2011 111 778

## Description

### CROSS-REFERENCE TO RELATED APPLICATIONS

This international application claims the benefit of Japanese Patent Application No. 2014-108352 filed on May 26, 2014 with the Japan Patent Office.

### TECHNICAL FIELD

The present invention relates to a wireless communication device to perform near field wireless communication and an apparatus for an electric power tool comprising the wireless communication device.

### BACKGROUND ART

There is a known control system in which wireless communication is performed with a communication device provided in an electric power tool to obtain, from the electric power tool, information indicating an operating state of the electric power tool and thereby control the operating state of the electric power tool (see, for example, Patent Documents 1 and 2).

### PRIOR ART DOCUMENTS

### PATENT DOCUMENTS

Patent Document 1: Japanese Unexamined Patent Application Publication No. 2014-21538
Patent Document 2: Japanese Unexamined Patent Application Publication No. 2011-192167

### SUMMARY OF THE INVENTION

### PROBLEMS TO BE SOLVED BY THE INVENTION

According to the aforementioned control system, the communication device provided in a control apparatus performs wireless communication with a plurality of electric power tools to allow the control apparatus to control the operating state of the plurality of electric power tools. For that purpose, the control apparatus is required to identify respective information from the individual electric power tools.

To prevent interference caused by transmission radio waves concurrently emitted from the plurality of electric power tools, it is required to adjust respective transmission timings from the individual electric power tools.

As a communication system that enables one-on-one communication without identifying a communication target or adjusting communication timings, there is a known near field communication system (i.e., NFC (Near Field Communication)) in accordance with International Standards ISO/IEC 14443, Japanese Industrial Standards JISX6319-4, and others.

This near field wireless communication system (NFC) is a technique to write and read information to and from an IC card, having an extremely short communication distance of several tens of centimeters. Communication devices for NFC are also incorporated in portable terminals, such as mobile phones and smartphones.

Accordingly, if an electric power tool is provided with a communication device for NFC, information can be written to or read from the specific electric power tool by using a portable terminal.

In NFC, a master, which is a card reader/writer, transmits a write request or a read request of information together with address information to a slave, which is an IC card.

In response to this, the slave writes information to or reads information from a specified storage area of a storage medium specified by the address information in accordance with the write request or the read request from the master. The slave then returns a response signal (ACK/Nack) in response to the write request or returns the information that has been read out in response to the read request.

Communication frames transmitted and received between the master and the slave are preset, and the address information for writing or reading information is indicated, for example, in a head frame of 2 bytes together with other information. Various information is indicated in an information frame (for example, a maximum of 16 bytes) between the head frame and the last frame (checksum, etc.).

This causes a problem in which the storage area of the storage medium, with respect to which a write request or a read request can be made from the master to the slave, is limited to, for example, 256 areas (in a case of addressing of 1 byte of the head frame).

US 2011/0111778 A1 discloses a method for controlling at least one message including at least one command and response corresponding to the at least one command. The method comprises generating a concatenated command by combining multiple commands from a sender, the multiple commands having the same priority, transmitting the concatenated command from the sender to a receiver, generating a concatenated response message corresponding to the concatenated command, and transmitting the concatenated response message from the receiver to the sender.

In one aspect of the present invention, it is desirable that, when information is written in or read from a storage medium by near field wireless communication, a wider area of a storage area of the storage medium can be specified.

### MEANS FOR SOLVING THE PROBLEMS

A wireless communication device according to one aspect of the present invention comprises a controller that reads information from a storage medium and writes information to a storage medium, and a communication device that performs near field wireless communication with an external device.

The communication device receives a read request or a write request transmitted in a communication frame for near field wireless communication from the external device and outputs the request to the controller. When the read request is received, the communication device obtains read information that has been read out by the controller from the storage medium in accordance with the read request and returns the information to the external device. When the write request is received, the communication device obtains, from the controller, a response signal indicating a result of writing of information to the storage medium and returns the signal to the external device.

If an information frame of the communication frame received by the communication device contains a plurality of commands, the controller stores the plurality of commands. Every time the communication device receives the write request or the read request thereafter, the controller reads or writes information from or to the storage medium by sequentially executing the commands.

Accordingly, in the wireless communication device according to the one aspect of the present invention, the external device initially transmits a plurality of commands using the communication frame for near field wireless communication and then sequentially transmits the write request or the read request corresponding to the plurality of commands. This allows the wireless communication device to write information to and read information from the storage medium.

Since the plurality of commands is stored in the information frame of the communication frame for near field wireless communication, each command has no limitation in data length. This allows the address information to have a longer data length when information is read from or written to the storage medium in response to each command, widening an addressable range.

The controller may be configured to obtain, from the information frame of the communication frame received by the communication device, authentication information on a requester that has transmitted the read request or the write request, and to perform a processing operation corresponding to the read request or the write request if the authentication information is legitimate.

This allows the controller to perform the processing operation corresponding to the read request or the write request only when the information frame received by the communication device contains legitimate authentication information. This inhibits erroneous execution of the reading of information from the storage medium and the returning of the information, or of the writing of information to the storage medium.

The wireless communication device according to the one aspect of the present invention may be incorporated in an apparatus for an electric power tool configured as an electric power tool, a battery attached to the electric power tool, or a charger that charges the battery, together with a storage medium in which information specific to the apparatus for an electric power tool is stored.

In this case, the storage medium may store information such as operating conditions and operational records of the electric power tool, charging/discharging conditions and operational records of the battery, or battery charging conditions and operational records of the charger. This allows operational records of the apparatus for an electric power tool to be obtained and operating conditions thereof to be written through the wireless communication device.

Since the wireless communication device is for near field wireless communication, a communication terminal (for example, a portable terminal such as a mobile phone or a smartphone) capable of near field wireless communication can be used as an external device transmitting and receiving information to and from the apparatus for an electric power tool.

Such an apparatus for an electric power tool allows reliability of communication to be ensured by near field wireless communication, while achieving effective use of the storage medium by setting the storage area where information is written to and read from the storage medium to a wider area.

### BRIEF DESCRIPTION OF THE DRAWINGS

FIG. 1 is a perspective view showing an appearance of an electric power tool (rechargeable screwdriver) of an embodiment.
FIG. 2 is a block diagram showing a circuit configuration of the electric power tool.
FIG. 3 is an operation explanatory diagram showing operations of a communication circuit and a control circuit in response to a read/write request from an external terminal.
FIG. 4 is an explanatory diagram showing formats of data transmitted/received between an external device and the electric power tool.
FIG. 5 is an explanatory diagram showing one example of commands transmitted from the external terminal.
FIG. 6 is an explanatory diagram showing one example of data transmitted from the electric power tool in response to the commands in FIG. 5.
FIG. 7 is an explanatory diagram illustrating tool information transmitted/received between the external device and the electric power tool.
FIG. 8 is a flowchart showing a control process executed by a control circuit (MCU) of the electric power tool.
FIG. 9 is a flowchart showing a notification control process shown in FIG. 8.
FIG. 10 is a flowchart showing a communication process shown in FIG. 8.
FIG. 11 is a flowchart showing a communication sub-process shown in FIG. 10.

### EXPLANATION OF REFERENCE NUMERALS

2...rechargeable screwdriver, 4...main body, 6...angle head, 8...battery pack, 12...motor 12a...rotation sensor, 14...operation device, 16...grip, 18...notification device, 20...control circuit, 22...motor drive device, 24...current detection device, 27...nonvolatile memory, 28...regulator, 30...communication circuit, 32...antenna portion, 34...communication controller, 36...RF interface, 38...memory, 39...serial interface, 40...connector, 50...external terminal.

### MODE FOR CARRYING OUT THE INVENTION

Hereinafter, an embodiment of the present invention will be described with reference to the drawings.

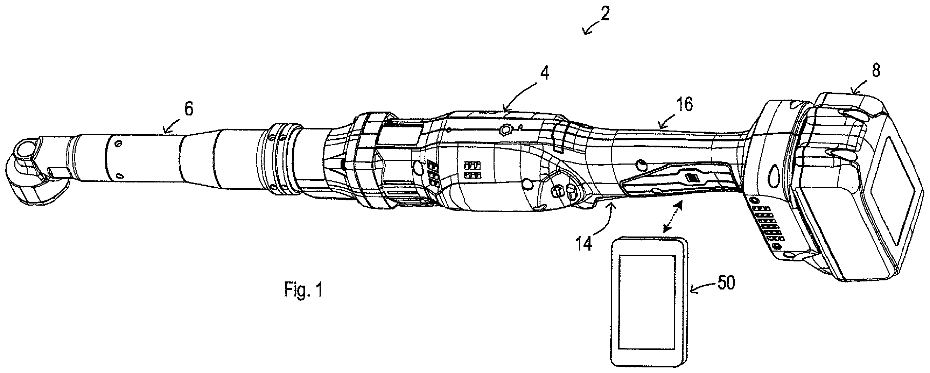

As shown in FIG. 1, a rechargeable screwdriver 2 according to an embodiment to which the present invention is applied comprises a main body 4 having an elongated shape, an angle head 6 detachably attached to one end portion in a longitudinal direction of the main body 4, and a battery pack 8 detachably attached to the other end portion in the longitudinal direction of the main body 4.

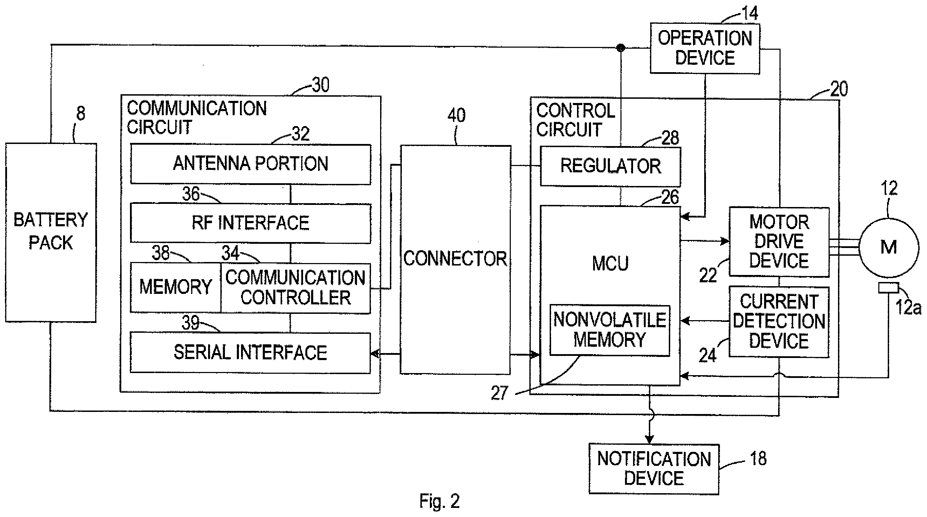

In the one end portion of the main body 4 to which the angle head 6 is attached, a motor 12 (see FIG. 2) to rotationally drive the angle head 6 is installed. The angle head 6 converts a rotation of the motor 12 with a rotation axis to a rotation with a rotation axis in a different direction through an inner gear mechanism, and then transmits the rotation to a front end tool.

In the middle of the main body 4, there is provided an operation device 14 for a user to input a drive command of the motor 12 through an external operation. Also, a grip 16 is provided between the operation device 14 and an attachment portion of the battery pack 8, in order to enable the user to operate the operation device 14, for example, with a pointing finger while gripping the main body 4.

The main body 4 houses therein a control circuit 20 and a communication circuit 30 shown in FIG. 2 in addition to the motor 12.

The control circuit 20 is configured to operate by receiving power supply from the battery pack 8 to control driving of the motor 12 in accordance with a command from the operation device 14.

Specifically, the control circuit 20 comprises a motor drive device 22 that supplies current to the motor 12 (a brushless motor in the present embodiment) to thereby drive the motor 12, a current detection device 24 that detects current flowing into the motor 12, and an MCU (Micro Control Unit) 26.

The MCU 26 controls the motor 12, through the motor drive device 22, based on detection signals from a rotation sensor 12a provided to the motor 12 and from the current detection device 24 so that the motor 12 rotates in accordance with the command from the operation device 14.

In order to perform such control, the MCU 26 comprises a nonvolatile memory 27 to store operating conditions (such as a rotation speed (speed) and a rotation amount (turns) of the motor 12) and respective setting changeable ranges (such as an upper limit value, a lower limit value, and a settable step value) when performing a screw fastening operation by the rechargeable screwdriver 2.

The nonvolatile memory 27 corresponds to one example of a storage device of the present invention, the control circuit 20 corresponds to one example of a controller of the present invention, and the communication circuit 30 corresponds to one example of a communication device of the present invention.

The control circuit 20 comprises a regulator 28 configured to receive power supply from the battery pack 8 and provide a power-supply voltage (a direct current constant voltage) to the MCU 26. Also, a notification device 18 to notify a user of various operating states is coupled to the MCU 26. The notification device 18 comprises a buzzer, an LED, and the like.

The communication circuit 30, which is configured to perform near field wireless communication of the NFC system with an external terminal 50 such as a smartphone, comprises an antenna portion 32, a communication controller 34, and an RF interface 36 that couples these components.

The communication circuit 30 also comprises a memory 38 to store various information necessary for communication with the external terminal 50 and a serial interface 39 to perform data communication with the MCU 26 of the control circuit 20.

The communication controller 34 controls data to communicate information for communication that is stored in the memory 38 between the RF interface 36 and the serial interface 39. Accordingly, the communication controller 34 performs a near field wireless communication with the external terminal 50, and communicates with the MCU 26 data transmitted and received to and from the external terminal 50 by the near field wireless communication, to thereby relay communication between the MCU 26 and the external terminal 50.

The control circuit 20 and the communication circuit 30 are configured by mounting electronic components onto respective different circuit substrates, and these components are coupled through the connector 40.

Specifically, the connector 40 couples a communication line between a communication port of the MCU 26 and the serial interface 39 of the communication circuit 30, as well as a power line to supply power from the regulator 28 to the communication controller 34.

The circuit substrate of the communication circuit 30 is housed in the grip 16 of the main body 4, and communication between the external terminal 50 and the communication circuit 30 is enabled by moving the external terminal 50 close to the grip 16.

The near field wireless communication of the NFC system is a technology to read data from an IC card and to write data to an IC card.

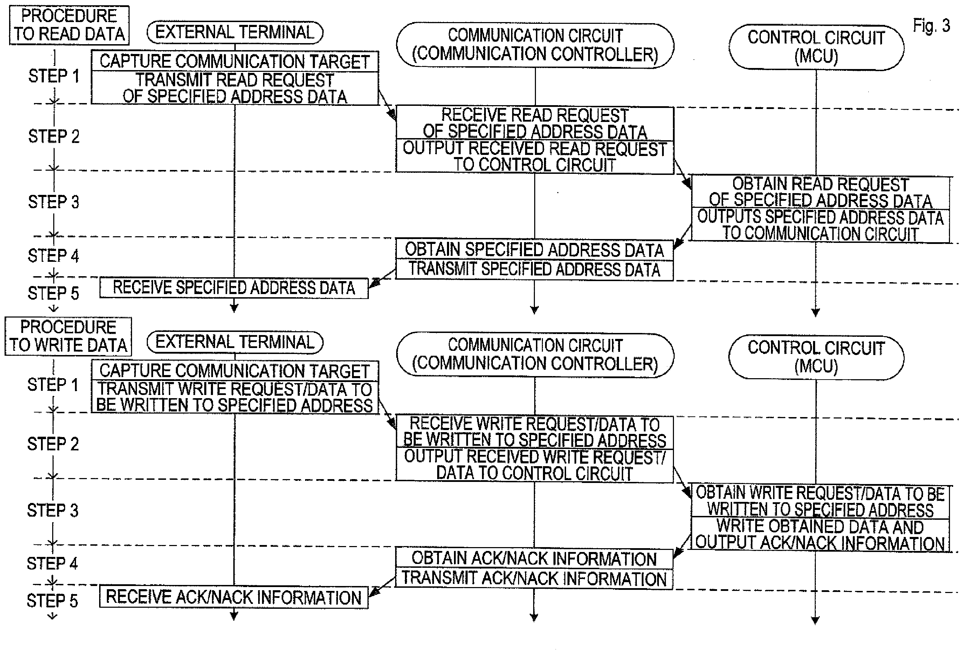

Accordingly, in the present embodiment, it is possible by using the external terminal 50 to read and write operating conditions of the motor 12 stored in the nonvolatile memory 27 according to procedures shown in FIG. 3.

Specifically, to read control information by using the external terminal 50, the external terminal 50 is first moved close to the grip 16 to be caused to capture the communication circuit 30 as a communication target, and then is caused to transmit a read request of desired data (specified address data) stored at a specified address of the nonvolatile memory 27 from the external terminal 50 to the communication circuit 30 (Step 1).

Then, the communication controller 34 of the communication circuit 30 receives the read request, and outputs (transfers) the read request to the control circuit 20 through the serial interface 39 (Step 2).

As a result, in the control circuit 20, the MCU 26 obtains the read request from the external terminal 50, reads the specified address data corresponding to the read request from the nonvolatile memory 27, and outputs the specified address data to the communication circuit 30 (Step 3).

Then, in the communication circuit 30, the communication controller 34 obtains the specified address data from the control circuit 20, and transmits the obtained specified address data to the external terminal 50 (Step 4).

As a result, the external terminal 50 can obtain the specified address data as requested (Step 5).

To write control information by using the external terminal 50, after the external terminal 50 is caused to capture the communication circuit 30 in the same manner as aforementioned, the external terminal 50 is caused to transmit to the communication circuit 30 from the external terminal 50 a write request of data to a specified address together with data to be written (Step 1).

Then, the communication controller 34 of the communication circuit 30 receives the write request and data, and outputs (transfers) the same to the control circuit 20 through the serial interface 39 (Step 2).

As a result, in the control circuit 20, the MCU 26 obtains the write request and data from the external terminal 50, writes the obtained data to the specified address of the nonvolatile memory 27, and outputs Ack/Nack information indicating a result of writing (Step 3).

Then, in the communication circuit 30, the communication controller 34 obtains the Ack/Nack information from the control circuit 20, and transmits the obtained Ack/Nack information to the external terminal 50 (Step 4).

As a result, the external terminal 50 receives the Ack/Nack information and is able to confirm whether the data transmitted together with the write request has been properly written (Step 5).

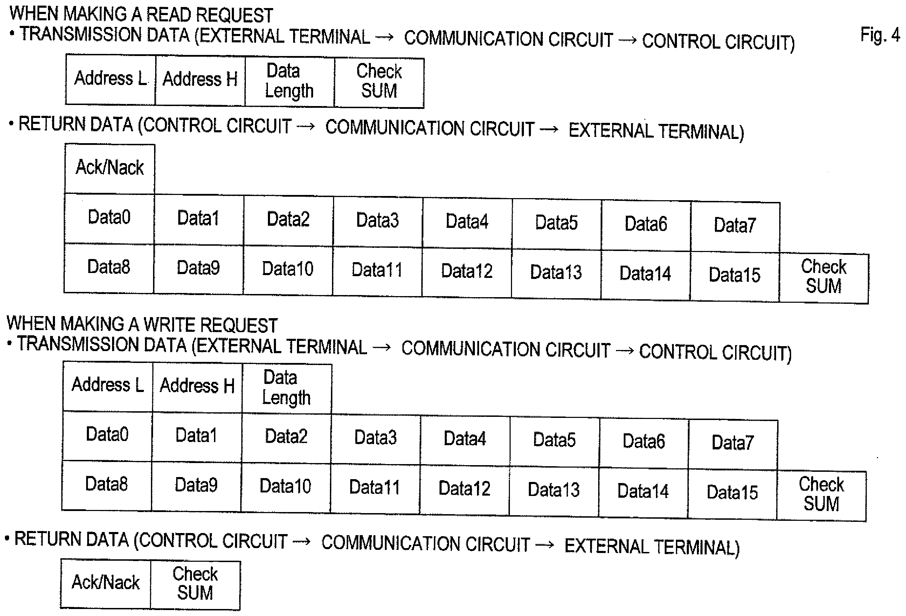

In the near field wireless communication of the NFC system, there are definitions of formats of data to be transmitted/received when performing reading/writing of the data. Thus, in the present embodiment, transmission/reception among the external terminal 50, the communication circuit 30, and the control circuit 20 is performed by using data formats in accordance with the definitions as shown in FIG. 4.

It is to be noted that in the near field wireless communication of the NFC system, the first 2 bytes ("Address L" and "Address H" shown in FIG. 4) of transmission data are used to specify an address in a storage medium when making a read request/write request from the external terminal 50. In this case, since a specifiable address occupies an area of substantially half of the 2 bytes, that is 8 bits, there is only an extremely small storage area from/to which reading/writing of data is possible in the storage medium.

In the present embodiment, therefore, it is configured to specify an address from or to which reading or writing of data is to be performed by using a data area (16 bytes of "Data0" to "Data15" shown in FIG. 4) for writing assigned to the transmission data when making a write request, without changing data formats.

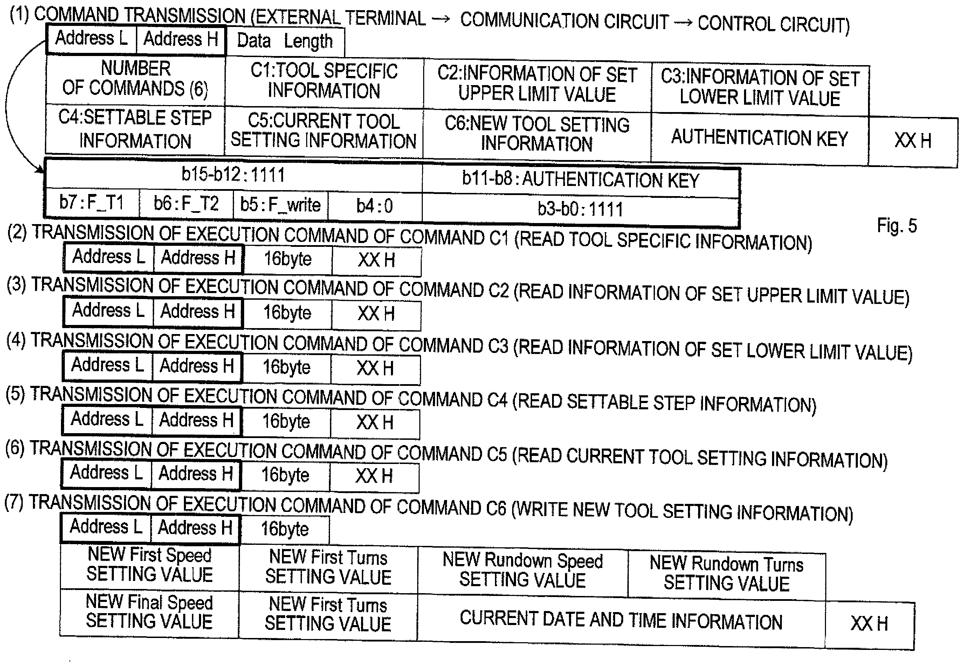

Specifically, as shown in (1) of FIG. 5, the external terminal 50 transmits at most six commands (C1 to C6 shown in FIG. 5) each making a reading or writing request of information at a specified address, the number of commands, and an authentication key by using a data area ("Data0" to "Data15") of transmission data when making a write request as shown in FIG. 4 in 2-byte units.

In the present embodiment, the commands C1 to C6 are each used for specifying an address of data to be read from or written to the nonvolatile memory 27.

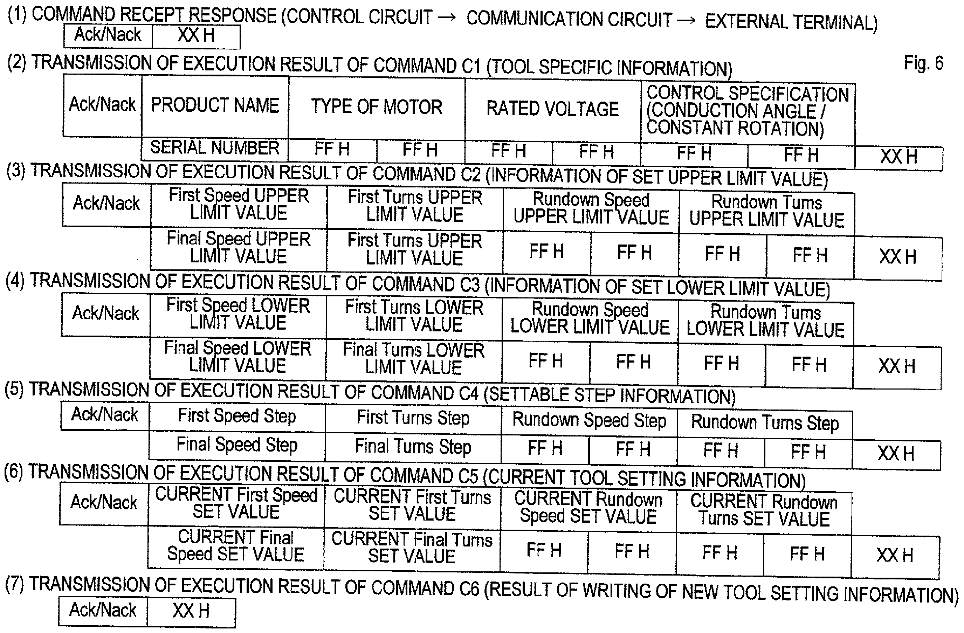

As a result of the transmission of the commands, the MCU 26 in the control circuit 20 stores the received plurality of commands C1 to C6 and returns Ack/Nack information indicating reception of the commands as shown in (1) in FIG. 6 through the communication circuit 30.

Subsequently, the external terminal 50 sequentially transmits read commands or write commands of data corresponding to the plurality of commands (C1 to C6) previously transmitted, as shown in (2) to (7) in FIG. 5.

Specifically, if the previously transmitted command is an address of information to be read from the nonvolatile memory 27, a read command of data at the previously specified address is transmitted as shown in (2) to (6) in FIG. 5, using the format for transmission data when making a write request shown in FIG. 4.

Then, the MCU 26 of the control circuit 20, as shown in (2) to (6) in FIG. 6, reads from the nonvolatile memory 27 information at the address corresponding to the previously received command, and returns read data using the data format when returning read data as shown in FIG. 4.

If the previously transmitted command is an address of information to be written to the nonvolatile memory 27, the external terminal 50 transmits write data as shown in (7) in FIG. 5 using the format for transmission data when making a write request shown in FIG. 4.

Then, the MCU 26 in the control circuit 20 writes received data at the address of the nonvolatile memory 27 corresponding to the previously received command, and returns a result of the writing (i.e., Ack/Nack information) as shown in (7) in FIG. 6.

Consequently, according to the present embodiment, it is possible to specify a wider range of addresses in the nonvolatile memory 27, and to execute reading or writing of information from or to the nonvolatile memory 27 by using the communication circuit 30 of a common type that performs the near field wireless communication of the NFC system.

As clear from FIG. 5, it is possible in the present embodiment to specify, as information to be read from the nonvolatile memory 27, specific information of the electric power tool, upper limit value information, lower limit value information, settable step information, and current tool setting information by using the commands C1 to C5.

The upper limit value information and the lower limit value information are information indicating an upper limit value and a lower limit value that are settable as operating conditions, the settable step information is information indicating a minimum unit to change setting of each operating condition, and the current tool setting information is information indicating currently set operating conditions.

Also, it is possible to set, as information to be written to the nonvolatile memory 27, new tool setting information to update the operating conditions by the command C6.

When setting the new tool setting information, a user can set the new tool setting information properly by confirming the upper limit value information, the lower limit value information, and the settable step information that are read from the nonvolatile memory 27.

Further, as clear from FIG. 6, the specific information of the electric power tool obtainable by the command C1 comprises a product name, a type of a motor, a rated voltage, a control specification, a serial number, etc.

The operating conditions that can be read by the commands C2 to C5 and be written by the command C6 are a rotation speed (First speed) and a rotation amount (First turns) of the motor 12 immediately after starting a screw fastening, a rotation speed (Rundown speed) and a rotation amount (Rundown turns) of the motor 12 during the screw fastening, and a rotation speed (Final speed) and a rotation amount (Final turns) of the motor 12 when finishing the screw fastening.

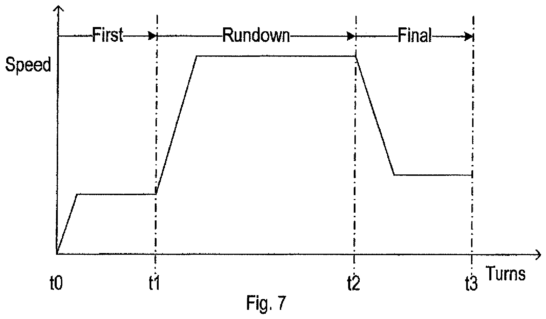

Specifically, in a case of performing a specified screw fastening using the rechargeable screwdriver 2, for example, in a manufacturing facility or the like, the motor 12 is rotated at a specified low speed from the start of screw fastening at a time point t0 until a time point t1 by which a screw has been rotated a specified amount, as shown in FIG. 7.

Thereafter, the motor 12 is rotated at a high speed to perform screw fastening, and the motor is rotated at a low speed after the screw fastening is mostly completed (at a time point t2) until a time point t3 by which the screw has been further rotated a specified amount in order to completely fasten the screw.

In order to properly perform such a screw fastening operation, the aforementioned various operating conditions (First speed, First turns, Rundown speed, Rundown turns, Final speed, and Final turns) are defined in the rechargeable screwdriver 2 of the present embodiment.

Also, to enable setting changes of these operating conditions by using the external terminal 50, the operating conditions and respective settable ranges thereof (the upper limit values, the lower limit values, and the settable step values) are stored in the nonvolatile memory 27.

In the transmission data from the external terminal 50 shown in FIG. 5, the head frame of 2 bytes ("Address L", "Address H") is not used for specifying an address.

In the present embodiment, therefore, as described in (1) in FIG. 5, 3 bits (b5, b6, b7) of the head frame are used to transmit, from the external terminal 50, flags F_T1 and F_T2 to be used in a later-described communication process as well as a flag F_write indicating whether the transmission data is a write request or a read request. Also, an authentication key of 4 bits that is specific to the external terminal 50 is assigned to the head frame.

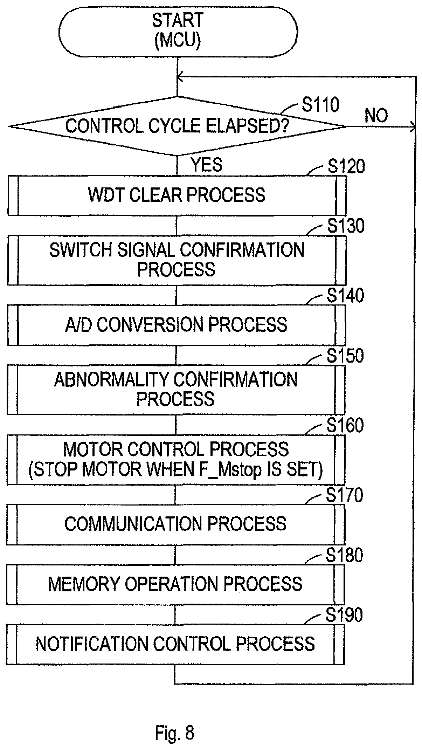

Next, a description will be given of a control process to be executed by the MCU 26 of the control circuit 20 to perform drive control of the motor 12, and reading and writing of information from and to the nonvolatile memory 27 in accordance with requests from the external terminal 50, with reference to flowcharts in FIG. 8 to FIG. 11.

As shown in FIG. 8, the MCU 26 determines in S110 (S means "Step") whether a specified control cycle has elapsed. If the specified control cycle has not elapsed, a determination process in S110 is executed again, and elapse of the specified control cycle is waited for.

When the specified control cycle has elapsed, processes in S120 onward are executed. That is, the MCU 26 periodically executes the processes in S120 onward with the specified control cycle.

In S120, a WDT clear process to clear a watch dog timer (WDT) is executed, and in subsequent S130, a signal (a switch signal) from an operation switch provided to the operation device 14 is confirmed.

In subsequent S140, an A/D conversion process is executed, in which an operation amount of the operation device 14, a current detected by the current detection device 24 and a battery voltage supplied by the battery pack 8, detection signals from the rotation sensor 12a provided to the motor 12, a not-shown temperature sensor, and the like, are A/D converted and acquired.

In subsequent S150, an abnormality confirmation process is executed, in which an abnormality, such as battery voltage reduction and overheat of the motor 12, is checked based on results of the A/D conversion in S140. In subsequent S160, a motor control process to control the driving of the motor 12 is executed.

In the motor control process, in a case where an abnormality is detected in the abnormality confirmation process, the driving of the motor 12 is stopped, and then a drive stopped state is maintained until a user's operation of the operation device 14 is finished. In the motor control process, the driving of the motor 12 is stopped also in a case where a flag F_Mstop to be set or reset (cleared) in a later-described communication process is set.

Subsequently, in S170, a communication process is executed, in which a write request or read request inputted from the external terminal 50 through the communication circuit 30 is received, and a result of writing or read information is returned.

In subsequent S180, a memory operation process to write data to the nonvolatile memory 27 or to read data from the nonvolatile memory 27 is executed based on the communication process in S170.

Finally, after proceeding to S190, a notification control process is executed, in which an abnormality detected in the abnormality confirmation process or an abnormality in the write data obtained in the communication process is notified to a user through the notification device 18, and the present process proceeds to S110.

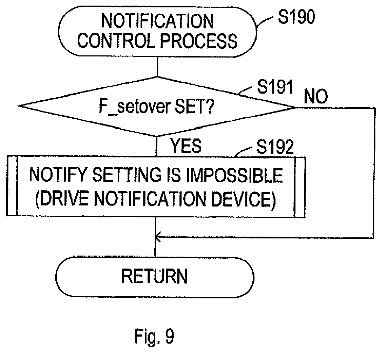

As shown in FIG. 9, in the notification control process, it is determined in S191 whether a flag F_setover to be set or reset (cleared) in the communication process is set, to thereby determine whether the update data of the operating condition obtained in the communication process is within an updatable range defined by the upper or lower limit value information or the settable step information shown in FIG. 6.

If the flag F_setover is set, the present process proceeds to S192, in which the notification device 18 is driven to notify such flag setting. Since the notification device 18 comprises the buzzer, the LED, and the like, as described above, the fact that the update data is outside the updatable range (in other words, updating by the update data is impossible) is notified to the user in S192 by means of sounding of the buzzer and lighting (or blinking) of the LED.

If the flag F_setover is not set, the notification control process is terminated.

Next, a description will be given of the communication process (S170) that is a major process in the present invention.

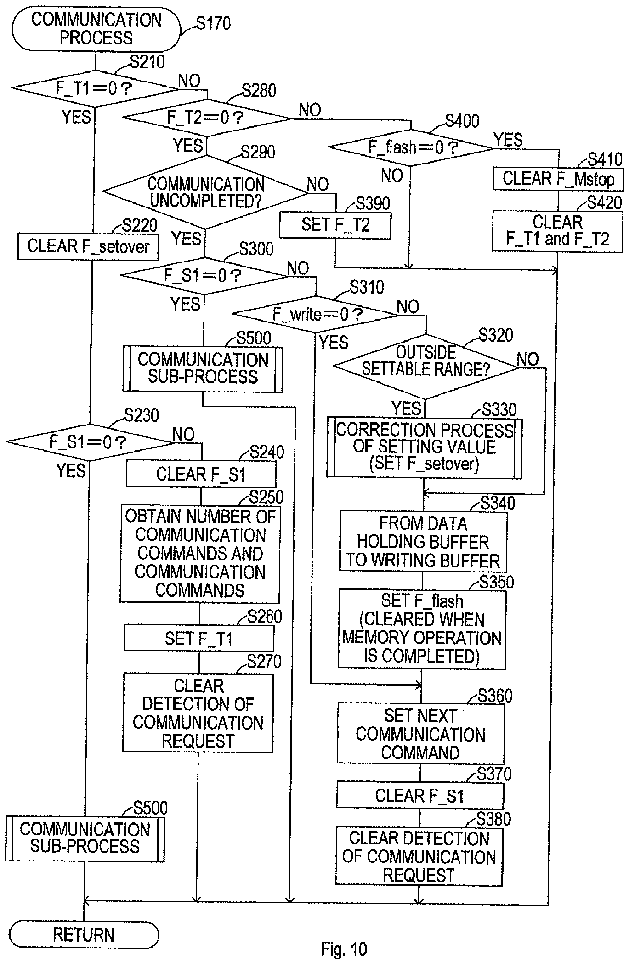

As shown in FIG. 10, in the communication process, it is determined in S210 whether a flag F_T1 is cleared to a value "0". The flag F_T1 is set to a cleared state from when initial transmission data indicating the plurality of commands C1 to C6 shown in (1) in FIG. 5 is received until when a reception process thereof (that is, a reply) is completed, by a later-described process and the transmission data from the external terminal 50.

Accordingly, in S210, from when the initial transmission data shown in (1) in FIG. 5 is received until when the reception process (that is, a reply) is completed, a positive determination is made and the present process proceeds to S220.

In S220, the flag F_setover is cleared, and the present process proceeds to S230, in which it is determined whether a flag F_S1 is cleared.

The flag F_S1 is a flag that is set when a series of processes from a write request or a read request (hereinafter also collectively referred to as a communication request) from the external terminal 50 to a reply in a communication sub-process in S500 is completed, and then is cleared when a waiting state for a next communication request is started.

Accordingly, in S230, from when the initial transmission data shown in (1) in FIG. 5 is received until when the reception process (that is, a reply) is completed, a positive determination is made in the same manner as in S210 and the communication sub-process in S500 is executed. After executing the communication sub-process, the communication process is terminated.

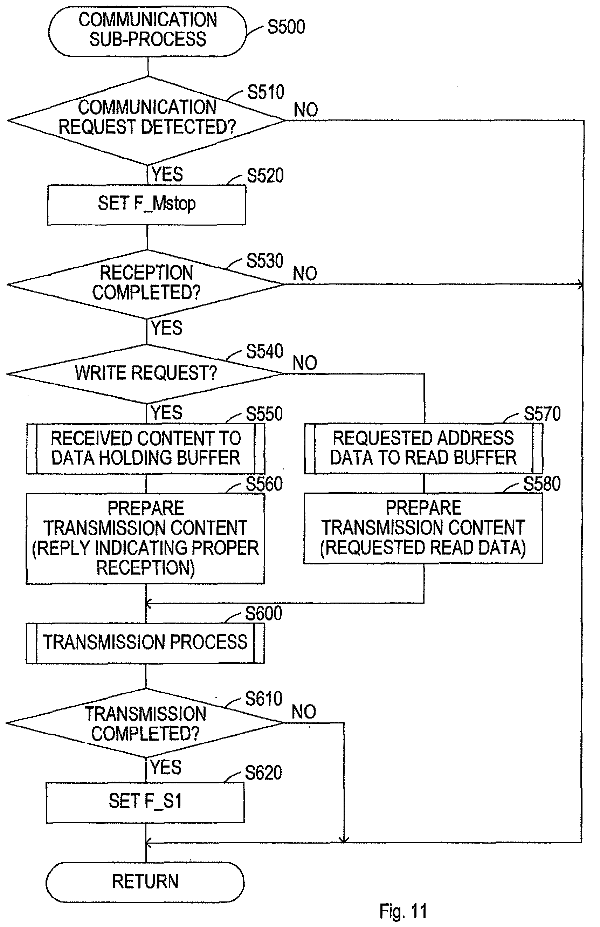

The communication sub-process, which is a process to execute a series of processes from reading or writing of data from or to the nonvolatile memory in accordance with the communication request from the external terminal 50 shown in (1) to (7) in FIG. 5 until returning the results (the information shown in (1) to (7) in FIG. 5), is performed according to a procedure shown in FIG. 11.

Specifically, in the communication sub-process, it is determined in S510 whether a communication request from the external terminal 50 is inputted through the communication circuit 30. If a communication request is not inputted, the communication sub-process is simply terminated, whereas if a communication request is inputted, the present process proceeds to S520.

In S520, a flag F_Mstop is set to stop the driving of the motor 12, and in subsequent S530, it is determined whether reception of all data of the communication request from the external terminal 50 is completed.

If reception of all data of the communication request is not completed, the communication sub-process is terminated, whereas if reception of all data of the communication request is completed, the present process proceeds to S540.

In S540, it is determined based on the flag F write of the head frame of the received data whether the currently received communication request is a write request or a read request.

If the currently received communication request is a write request, the present process proceeds to S550, in which a received content is written to a data holding buffer. In subsequent S560, a transmission content (the Ack/Nack information shown in (1) and (7) in FIG. 6) to reply indicating that write data has been properly received is prepared, and then the present process proceeds to S600.

If the currently received communication request is a read request, the present process proceeds to S570, in which an address of data to be read from the nonvolatile memory 27 in accordance with the read request (in other words, an address specified by each of the commands C1 to C5 shown in FIG. 5) is written to a read buffer.

Then, data of the address written to the read buffer is read from the nonvolatile memory 27 in the memory operation process in S180. In subsequent S580, a transmission content (the information shown in (2) to (6) in FIG. 6) to return the read data to the external terminal 50 is prepared, and then the present process proceeds to S600.

In S600, a transmission process is executed, in which the information prepared in S560 or S580 is outputted to the communication circuit 30, to thereby cause the communication circuit 30 to transmit (return) the information to the external terminal 50.

In S610, it is determined whether the transmission process in S600 is completed. If the transmission process is completed, the flag F S1 is set in S620, and the communication sub-process is terminated. If it is determined in S610 that the transmission process is not completed, the communication sub-process is temporarily terminated.

When the flag F_S1 is set in the communication sub-process as described above, a negative determination is made in S230, and the subsequent S240 is executed.

In S240, the flag F_S1 is cleared, and in S250, the number of communication commands and the communication commands are obtained from the transmission data (in this case, the initial transmission data shown in (1) in FIG. 5) that is obtained in the communication sub-process in S500.

In subsequent S260, the flag F T1 is set, and in S270, a detection state of a communication request in the communication sub-process is cleared, and the present communication process is terminated.

When the number of communication commands and the communication commands are obtained as described above, the flag F_T1 is set; thus, a negative determination is to be made in S210 in the communication process. When a negative determination is made in S210, the present process proceeds to S280, in which it is determined whether a flag F_T2 is cleared to a value "0."

The flag F_T2 is set to a cleared state until later-described processes as well as the plurality of commands C1 to C6 initially transmitted from the external terminal 50 by the transmission data from the external terminal 50 are all completely executed.

Accordingly, in S280, a positive determination is made until the plurality of commands are completely executed, and then the present process proceeds to S290. In S290, it is determined whether communications for the number of communication commands obtained in S250 are uncompleted, in other words, processes corresponding to the initially obtained plurality of communication commands still remain.

If communications for the number of communication commands are uncompleted and commands to be executed still remain, the present process proceeds to S300, in which it is determined whether the flag F_S1 is cleared. If the flag F_S1 is cleared, the communication sub-process in S500 is executed.

In the communication sub-process executed at that point, reception of the initial transmission data from the external terminal 50 (that is, reception of the number of communication commands and of the communication commands) is completed.

Accordingly, in the communication sub-process to be executed when a positive determination is made in S300, an execution command of each of the commands included in the initial transmission data is received as a communication request, and writing or reading of information to or from the nonvolatile memory 27 is performed in response to the execution command.

It is to be noted that when it is determined in S510, after obtaining the plurality of commands by the initial transmission data, whether a communication request is received, a comparison is made between the authentication key assigned to the head frame of the initial transmission data and an authentication key assigned to the head frame of the currently received communication request. If these are identical, it is determined that an execution command of the command is received.

This is intended to inhibit erroneous operation caused by a transmission signal from an external device different from the external terminal 50 that initially transmitted the plurality of commands.

If it is determined in S300 that the flag F_S1 is set, this means that it is immediately after a communication with respect to one of the commands is completed by the communication sub-process, and thus the present process proceeds to S310. In S310, it is determined whether the flag F_write of the head frame of the currently received data is cleared, in other words, whether the communication request is a read request.

If the flag F_write is cleared, and the communication request is a read request, the present process proceeds to S360, in which a communication command to be executed next is set. In S360, if communications for the number of communication commands are completed, and thus any next communication command cannot be set, such fact is stored for the determination process in S290.

In subsequent S370, the flag F S1 is cleared, and in S380, the detection state of a communication request in the communication sub-process is cleared, and the present communication process is terminated.

If it is determined in S310 that the flag F_write is set, the communication request is a write request, and thus the present process proceeds to S320.

In S320, it is determined whether the write data (in the present embodiment, new tool setting information shown in (7) in FIG. 5) that is stored to the data holding buffer in the communication sub-process is within a settable range (upper and lower limit values), and also corresponds to a settable step value.

If it is determined in S320 that the write data is within the settable range and corresponds to the settable step value, the present process proceeds to S340.

If it is determined in S320 that the write data is outside the settable range or does not correspond to the settable step value, the present process proceeds to S330.

In S330, if the write data stored in the data holding buffer is outside the settable range, the write data is corrected to be a value closer to the currently received write data within the upper and lower limit values of the settable range, and the present process proceeds to S340.

If the write data does not correspond to the settable step value, the write data is corrected to a value closest to the currently received write data among values settable by the settable step value, and the present process proceeds to S340.

In S340, the write data in the data holding buffer is transferred to a writing buffer, and in S350, a flag F_flash is set. Then, the present process proceeds to S360.

The flag F_flash is cleared when the write data in the writing buffer is written to a specified address of the nonvolatile memory 27 corresponding to the command in the memory operation process in S180.

In a correction process in S330, it is impossible to write a setting value corresponding to the write request from the external terminal 50, and thus the flag F setover is set to notify the fact to the user.

As a result, it is notified to the user through the notification device 18 by the notification control process shown in FIG. 9 that it is impossible to write a setting value corresponding to the write request, and the user can detect the fact.

If it is determined in S290 that the communications for the number of communication commands are completed, the present process proceeds to S390, in which the flag F_T2 is set, and then the present communication process is terminated.

If it is determined in S280 that the flag F T2 is set, the present process proceeds to S400, in which it is determined whether the flag F_flash is cleared, in other words, whether writing of the write data to the nonvolatile memory 27 in the memory operation process in S180 is completed.

If it is determined in S400 that the flag F_flash is set, writing to the nonvolatile memory 27 is not completed, and thus the present communication process is simply terminated.

If it is determined in S400 that the flag F_flash is cleared, it means that processes corresponding to the plurality of commands transmitted from the external terminal 50 are all completed. Thus, the present process proceeds to S410, in which the flag F_Mstop is cleared to permit the driving of the motor 12 by the motor control process.

In subsequent S420, the flags F_T1 and F_T2 are cleared so that a series of memory operations corresponding to the communication request from the external terminal 50 can be executed, and then the present communication process is terminated.

As described above, the rechargeable screwdriver 2 according to the present embodiment is provided with the communication circuit 30 that performs wireless communication via near field wireless communication with the external terminal 50. The communication circuit 30 is capable of transmitting and receiving data in NFC data formats, relaying such data between the external terminal 50 and the control circuit 20. Between the external terminal 50 and the control circuit 20, communication specific to the present invention is performed using the NFC data formats.

Specifically, a plurality of commands (addresses of 2 bytes according to the present embodiment) is transmitted from the external terminal 50, by using the information frame of 16 bytes in the communication frame used for the read request, and then communication requests corresponding to the respective commands (addresses) are sequentially transmitted.

The control circuit 20 stores the plurality of commands initially transmitted thereto, together with the number of the commands, and sequentially writes or reads data corresponding to the commands (addresses) in accordance with the communication requests subsequently transmitted thereto.

This allows the rechargeable screwdriver 2 according to the present embodiment to specify a wider range of addresses than conventionally does, through the external terminal 50 such as a smartphone, using the communication frame for near field wireless communication.

This increases an amount of data that can be written in or read from the nonvolatile memory 27.

The head frame of the transmission data from the external terminal 50 is provided with an authentication key. If the control circuit 20 obtains a plurality of commands from the external terminal 50 and then a communication request is transmitted thereto from another external device, the control circuit 20 can identify, from the authentication key, whether the memory operations should be performed in response to the communication request.

This inhibits the MCU 26 from erroneously executing the writing or reading of data to or from the nonvolatile memory 27, to thereby increase reliability of the memory operations by near field wireless communication.

Although the embodiment of the present invention has been described as above, the present invention is not limited to the aforementioned embodiment, but may be in various modes within the scope not departing from the subject matter of the present invention.

For example, in the aforementioned embodiment, a case has been described where the present invention is applied to the rechargeable screwdriver 2. However, the present invention can be applied to various types of electric power tools other than rechargeable screwdrivers. The present invention can also be applied to battery packs that supply electric power to electric power tools, to chargers therefor, and even to devices different from these apparatuses for an electric power tool.

Thus, the present invention can be applied to any wireless communication device that writes or reads information to or from a storage medium by performing near field wireless communication, as well as to any device that comprises such a wireless communication device, in a similar manner to the aforementioned embodiment to thereby obtain a similar effect to the aforementioned embodiment.

## Claims

1. A wireless communication device comprising:
a controller (20) that is configured to read information from and to write information to a storage medium (27); and
a communication device (30) for near field wireless communication, the communication device (30) being configured to receive a read request or a write request transmitted in a communication frame for near field wireless communication from an external device (50) and output the request to the controller (20), the communication device (30) being configured to obtain read information that has been read out by the controller (20) from the storage medium (27) in accordance with the read request and to thereby return the information to the external device (50) when the read request is received, and the communication device (30) being configured to obtain, from the controller (20), a response signal indicating a result of writing of information to the storage medium (27) and to thereby return the response signal to the external device (50) when the write request is received,
wherein the controller (20) is configured to, if an information frame of the communication frame received by the communication device (30) contains a plurality of commands, store the plurality of commands and then read or write information from or to the storage medium (27) by sequentially executing the commands every time the communication device (30) receives the write request or the read request thereafter.

2. The wireless communication device according to claim 1, wherein the controller (20) is configured to obtain, from the information frame of the communication frame received by the communication device (30), authentication information on a requester that has transmitted the read request or the write request, and to perform a processing operation corresponding to the read request or the write request if the authentication information is legitimate.

3. An apparatus for an electric power tool configured as an electric power tool (2), a battery (8) configured to be attached to the electric power tool (2), or a charger configured to charge the battery (8), the apparatus comprising:
a storage medium (27) that stores information specific to the apparatus for an electric power tool; and
a wireless communication device according to claim 1 or claim 2,
wherein the wireless communication device is configured to write or read information to or from the storage medium (27) in response to a write request or a read request from an external device (50).

## Patentansprüche

1. Drahtloskommunikationsvorrichtung mit:
einer Steuerung (20), die zum Lesen von Information aus und zum Schreiben von Information in ein Speichermedium (27) ausgebildet ist; und
einer Kommunikationsvorrichtung (30) für Nahfelddrahtloskommunikation, wobei die Kommunikationsvorrichtung (30) zum Empfangen einer Leseanfrage oder einer Schreibanfrage, die in einem Kommunikationsrahmen für Nahfelddrahtloskommunikation von einer externen Vorrichtung (50) übertragen wird, und Ausgeben der Anfrage zu der Steuerung (20) ausgebildet ist, wobei die Kommunikationsvorrichtung (30) zum Erhalten von gelesener Information, die durch die Steuerung (20) aus dem Speichermedium (27) gemäß der Leseanfrage ausgelesen wurde, und zum dadurch Zurückgeben der Information zu der externen Vorrichtung (50), wenn die Leseanfrage empfangen wird, ausgebildet ist, und die Kommunikationsvorrichtung (30) zum Erhalten eines Antwortsignals, das ein Ergebnis eines Schreibens der Information in das Speichermedium (27) angibt, von der Steuerung (20) und zum dadurch Zurückgeben des Antwortsignals zu der externen Vorrichtung (50), wenn die Schreibanfrage empfangen wird, ausgebildet ist,
bei der die Steuerung (20) dazu ausgebildet ist, wenn ein Informationsrahmen des Kommunikationsrahmens, der von der Kommunikationsvorrichtung (30) empfangen wird, mehrere Befehle enthält, die mehreren Befehle zu speichern und dann Information aus dem Speichermedium (27) zu lesen oder in dieses zu schreiben, indem die Befehle jedes Mal dann, wenn die Kommunikationsvorrichtung (30) danach die Schreibanfrage oder die Leseanfrage empfängt, der Reihe nach ausgeführt werden.

2. Drahtloskommunikationsvorrichtung nach Anspruch 1, bei der die Steuerung (20) dazu ausgebildet ist, aus dem Informationsrahmen des Kommunikationsrahmens, der durch die Kommunikationsvorrichtung (30) empfangen wird, Authentifizierungsinformation in Bezug auf einen Anforderer, der die Leseanfrage oder die Schreibanfrage übertragen hat, zu erhalten und eine Verarbeitung entsprechend der Leseanfrage oder der Schreibanfrage durchzuführen, wenn die Authentifizierungsinformation legitim ist.

3. Vorrichtung für ein elektrisches Kraftwerkzeug, die als ein elektrisches Kraftwerkezug (2), eine Batterie (8), die zum Anbringen an dem elektrischen Kraftwerkzeug (2) ausgebildet ist, oder ein Ladegerät, das zum Laden der Batterie (8) ausgebildet ist, ausgebildet ist, mit:
einem Speichermedium (27), das Information, die spezifisch für die Vorrichtung für ein elektrisches Kraftwerkzeug ist, speichert; und
einer Drahtloskommunikationsvorrichtung nach Anspruch 1 oder Anspruch 2,
bei der die Drahtloskommunikationsvorrichtung dazu ausgebildet ist, ansprechend auf eine Schreibanfrage oder eine Leseanfrage von einer externen Vorrichtung (50) Information in das Speichermedium (27) zu schreiben oder aus diesem zu lesen.

## Revendications

1. Dispositif de communication sans fil comprenant :
un dispositif de commande (20) configuré pour lire des informations depuis et écrire des informations sur un support de stockage (27) ; et
un dispositif de communication (30) pour une communication sans fil en champ proche, le dispositif de communication (30) étant configuré pour recevoir une demande de lecture ou une demande d'écriture transmise dans une trame de communication pour une communication sans fil en champ proche depuis un dispositif externe (50) et pour émettre la demande au dispositif de commande (20), le dispositif de communication (30) étant configuré pour obtenir des informations de lecture lues par le dispositif de commande (20) à partir du support de stockage (27) conformément à la demande de lecture et pour renvoyer ainsi les informations au dispositif externe (50) lorsque la demande de lecture est reçue, et le dispositif de communication (30) étant configuré pour obtenir, du dispositif de commande (20), un signal de réponse indiquant un résultat de l'écriture d'informations sur le support de stockage (27) et pour renvoyer ainsi le signal de réponse au dispositif externe (50) lorsque la demande d'écriture est reçue,
dans lequel le dispositif de commande (20) est configuré pour, si une trame d'informations de la trame de communication reçue par le dispositif de communication (30) contient une pluralité de commandes, stocker la pluralité de commandes, puis lire ou écrire des informations depuis ou vers le support de stockage (27) en exécutant les commandes de manière séquentielle chaque fois que le dispositif de communication (30) reçoit la demande d'écriture ou la demande de lecture par la suite.

2. Dispositif de communication sans fil selon la revendication 1, dans lequel le dispositif de commande (20) est configuré pour obtenir, à partir de la trame d'informations de la trame de communication reçue par le dispositif de communication (30), des informations d'authentification sur un demandeur qui a transmis la demande de lecture ou la demande d'écriture, et pour effectuer une opération de traitement correspondant à la demande de lecture ou à la demande d'écriture si les informations d'authentification sont légitimes.

3. Dispositif d'utilisation d'un outil électrique configuré comme un outil électrique (2), une batterie (8) configurée pour être fixée à l'outil électrique (2) ou un chargeur configuré pour charger la batterie (8), le dispositif comprenant :
un support de stockage (27) qui stocke des informations spécifiques au dispositif pour un outil électrique ; et
un dispositif de communication sans fil selon la revendication 1 ou la revendication 2,
dans lequel le dispositif de communication sans fil est configuré pour écrire ou lire des informations sur ou depuis le support de stockage (27) en réponse à une demande d'écriture ou à une demande de lecture d'un dispositif externe (50).
